# EUROPÄISCHE PATENTANMELDUNG

(11) **EP 4 036 050 A1**
(43) Veröffentlichungstag der Anmeldung: **03.08.2022**
(21) Anmeldenummer: 21154139.6
(22) Anmeldetag: 28.01.2021
(51) Int. Cl.: B66F 9/075, B60P 3/073

(54) **VORRICHTUNG ZUR FIXIERUNG EINES HUBWAGENS UND FAHRZEUG MIT EINER DERARTIGEN VORRICHTUNG**

(71) Anmelder: Schliefer, Thomas, 51647 Gummersbach (DE)
(72) Erfinder: Schliefer, Thomas, 51647 Gummersbach (DE)
(74) Vertreter: Kutzenberger Wolff & Partner

(57) **Zusammenfassung**

Die vorliegende Erfindung betrifft eine Vorrichtung (10) zur Fixierung eines mindestens zwei Gabelzinken (41) aufweisenden Hubwagens (40) mit einer Plattform (30), mit einem Klemmelement (20) zur Beaufschlagung der Gabelzinken (41) des Hubwagens (40) mit einer Drucckraft in Richtung der Plattform (30), und mit einem steuerbaren Aktuator (2), der dazu konfiguriert ist, das Klemmelement (20) in einem wahlweise aktivierbaren Klemmzustand mit einer Klemmkraft in Richtung der Plattform (30) zu beaufschlagen.

## Beschreibung

### Stand der Technik

Die vorliegende Erfindung betrifft eine Vorrichtung zur Fixierung eines mindestens zwei Gabelzinken aufweisenden Hubwagens. Derartige Hubwagen können als Handhubwagen oder elektrische Hubwagen (Elektroameisen) ausgebildet sein. Ferner betrifft die Erfindung ein Fahrzeug, insbesondere einen Lastkraftwagen, mit einer Ladefläche und einer an der Ladefläche angeordneten Vorrichtung zur Fixierung eines Hubwagens.

Hubwagen und Elektroameisen werden auf Ladeflächen von LKW gewöhnlicherweise mit Gurten von außen gesichert. Dieser Vorgang ist in den meisten Fällen jedoch sehr zeitaufwändig und arbeitsintensiv und wird daher von den meisten Fahrer falsch oder überhaupt nicht durchgeführt..

### Offenbarung der Erfindung

Die Aufgabe der vorliegenden Erfindung ist es, das Fixieren eines Hubwagens mit wenigen Handgriffen zu ermöglichen.

Zur **Lösung** der Aufgabe wird eine Vorrichtung zur Fixierung eines mindestens zwei Gabelzinken aufweisenden Hubwagens vorgeschlagen,
mit einer Plattform,
mit einem Klemmelement zur Beaufschlagung der Gabelzinken des Hubwagens mit
einer Druckkraft in Richtung der Plattform,
und mit einem steuerbaren Aktuator, der dazu konfiguriert ist, das Klemmelement in einem wahlweise aktivierbaren Klemmzustand mit einer Klemmkraft in Richtung der Plattform zu beaufschlagen.

Die erfindungsgemäße Vorrichtung ist sowohl arbeitssparender als eine herkömmliche Gurtsicherung als auch sicherer als eine Sicherung mit einem Wegfahrblock. Zum Fixieren des Hubwagens kann dieser auf die Plattform gefahren werden. Die Gabelzinken des Hubwagens können derart angeordnet werden, dass sich diese zwischen dem Klemmelement und der Plattform befinden. Durch das Klemmelement können die Gabelzinken des Hubwagens dann mit einer Klemmkraft beaufschlagt werden, die in Richtung der Plattform gerichtet ist und die Gabelzinken zwischen dem Klemmelement und der Plattform einklemmt. Die auf die Gabelzinken wirkende Klemmkraft kann dabei durch den steuerbaren Aktuator bereitgestellt werden. Um diese auf die Gabelzinken wirkende Klemmkraft bereitzustellen, kann der steuerbare Aktuator wahlweise in einen Klemmzustand verbracht werden. Der steuerbare Aktuator drückt oder zieht dabei in dem Klemmzustand das Klemmelement in Richtung der Plattform, so dass die Gabelzinken zwischen dem Klemmelement und der Plattform eingeklemmt werden. Durch die erfindungsgemäße Vorrichtung wird es möglich, einen Hubwagen mit wenigen Handgriffen sicher zu fixieren. Folglich kann ein Schutz für Personen, das Fahrzeug und das Ladegut ermöglicht werden, wobei die Arbeit des Fahrers vereinfacht und sicherer gemacht wird, wobei die erforderliche Zeit zum Sichern des Hubwagens reduziert wird.

Bevorzugt kann der steuerbare Aktuator in einen wahlweise aktivierbaren Freigabezustand verbracht werden, in welchem der Aktuator das Klemmelement nicht mit einer Klemmkraft in Richtung der Plattform beaufschlagt. In diesem Freigabezustand kann das Klemmelement in einer Richtung von der Plattform weg bewegt werden, so dass zwischen dem Klemmelement und der Plattform angeordnete Gabelzinken eines Hubwagens freigegeben werden. In diesem Freigabezustand kann der Hubwagen aus der Vorrichtung entfernt werden. Die Bewegung des Klemmelements von der Plattform weg kann beispielsweise manuell durch einen Benutzer der Vorrichtung erfolgen. Alternativ kann vorgesehen sein, dass der steuerbare Aktuator dazu konfiguriert ist, das Klemmelement in den wahlweise aktivierbaren Freigabezustand in Richtung von der Plattform weg zu bewegen.

Die erfindungsgemäße Vorrichtung ist geeignet zum Fixieren von Hubwagen, insbesondere Handhubwagen und elektrischen Hubwagen, die auch als Elektroameisen bezeichnet werden. Diese Hubwagen weisen bevorzugt genau zwei Gabelzinken auf. Die Gabelzinken des Hubwagens können auch als Arme bezeichnet werden.

Vorteilhaft ist es, wenn der steuerbare Aktuator dazu konfiguriert ist, das Klemmelement in dem wahlweise aktivierbaren Klemmzustand mit einer Klemmkraft in Richtung der Plattform zu beaufschlagen, die mindestens 500 N, bevorzugt mindestens 700 N, besonders bevorzugt mindestens 1.000 N oder 2.000 N, beispielsweise 2.500 N, beträgt. Besonders vorteilhaft ist es, wenn der steuerbare Aktuator dazu konfiguriert ist, das Klemmelement in dem wahlweise aktivierbaren Klemmzustand mit einer Klemmkraft in Richtung der Plattform zu beaufschlagen, die mindestens 3.000 N, bevorzugt mindestens 4.000 N, besonders bevorzugt mindestens 5.000 N oder 5.500 N, beispielsweise 6.000 N, beträgt. Eine derartig große Klemmkraft hat sich als ausreichend erwiesen, einen Hubwagen auf der Ladefläche eines Fahrzeugs, insbesondere Lastkraftwagens zu fixieren, während sich das Fahrzeug bewegt.

Gemäß einer vorteilhaften Ausgestaltung der Erfindung ist vorgesehen, dass der steuerbare Aktuator ein Linearaktuator ist, der ein feststehendes Aktuatorelement und ein gegenüber dem feststehenden Aktuatorelement bewegbares Aktuatorelement, insbesondere eine bewegbare Stange, aufweist. Der Linearaktuator kann in dem Klemmzustand eine translatorische Bewegung des Klemmelements auf die Plattform zu ermöglichen. Bevorzugt erfolgt die translatorische Bewegung in einer im Wesentlichen senkrechten Richtung, besonders bevorzugt in einer senkrechten Richtung.

Bevorzugt ist das feststehende Aktuatorelement an dem Klemmelement angeordnet. Besonders bevorzugt ist das feststehende Aktuatorelement fest mit dem Klemmelement verbunden, sodass sich das feststehende Aktuatorelement nicht gegenüber dem Klemmelement bewegen kann. Das bewegbare Aktuatorelement kann sich gegenüber dem Klemmelement bewegen, um das Klemmelement in dem Klemmzustand mit der Klemmkraft in Richtung der Plattform zu beaufschlagen. Eine derartige Ausgestaltung der erfindungsgemäßen Vorrichtung eignet sich als Nachrüstlösung für Fahrzeuge, insbesondere Lastkraftwagen, und kann an einer Ladfläche eines solchen Fahrzeugs angeordnet werden, um einen Hubwagen gegenüber der Ladefläche zu fixieren.

Alternativ ist es bevorzugt, wenn das feststehende Aktuatorelement an der Plattform angeordnet ist. Besonders bevorzugt ist das feststehende Aktuatorelement fest mit der Plattform verbunden, sodass sich das feststehende Aktuatorelement nicht gegenüber der Plattform bewegen kann. Das bewegbare Aktuatorelement kann sich gegenüber der Plattform bewegen, um das Klemmelement in dem Klemmzustand mit der Klemmkraft in Richtung der Plattform zu beaufschlagen. Eine derartige Ausgestaltung der erfindungsgemäßen Vorrichtung eignet sich für Fahrzeuge, insbesondere Lastkraftwagen, und kann an einer Ladfläche eines solchen Fahrzeugs angeordnet werden, um einen Hubwagen gegenüber der Ladefläche zu fixieren.

Gemäß einer vorteilhaften Ausgestaltung der Erfindung ist vorgesehen, dass der steuerbare Aktuator ein elektromechanischer Aktuator ist. Der elektromechanische Aktuator umfasst bevorzugt einen Elektromotor. Der Elektromotor kann mit elektrischer Energie versorgt werden, um den steuerbaren Aktuator von einem Zustand, beispielsweise einem Freigabezustand, in einen anderen Zustand, beispielsweise den Klemmzustand, zu versetzen. Zur Bereitstellung der elektrischen Energie kann die Vorrichtung einen elektrischen Energiespeicher, beispielswiese eine Batterie, aufweisen. Der elektrische Energiespeicher ist bevorzugt an dem Klemmelement angeordnet. Alternativ kann der elektrische Energiespeicher an der Plattform angeordnet sein. Weiter alternativ kann die Vorrichtung einen Netzanschluss aufweisen, über welchen der steuerbare Aktuator mit elektrischer Energie aus einem vorrichtungsexternen Stromnetz, beispielsweise einen Bordnetz eines Fahrzeugs, versorgt werden kann. Bevorzugt ist der elektromechanische Aktuator selbstsperrend ausgebildet, so dass der elektromechanische Aktuator in dem Klemmzustand zunächst bestromt wird, um das Klemmelement mit der Klemmkraft in Richtung der Plattform zu beaufschlagen und dann in einer Stellung verweilt, in welcher der elektromechanische Aktuator nicht bestromt werden muss, aber gleichwohl das Klemmelement in Richtung der Plattform mit der Klemmkraft beaufschlagt. Der elektromechanische Aktuator kann ein elektromechanischer Linearantrieb sein. Der elektromechanische Linearantrieb kann eine Spindel aufweisen.

Gemäß einer alternativen, vorteilhaften Ausgestaltung ist vorgesehen, dass der steuerbare Aktuator ein pneumatischer Aktuator ist. Bevorzugt umfasst der pneumatische Aktuator einen Pneumatikzylinder. Der Pneumatikzylinder kann entweder als einseitig und als beidseitig mit Druckluft beaufschlagbarer Pneumatikzylinder ausgebildet sein. Eine derartige Ausgestaltung bietet den Vorteil, dass der steuerbare Aktuator an ein Pneumatiksystem eines Fahrzeugs angeschlossen werden kann.

Gemäß einer weiter alternativen, vorteilhaften Ausgestaltung ist vorgesehen, dass der steuerbare Aktuator ein hydraulischer Aktuator ist. Bevorzugt umfasst der hydraulische Aktuator einen Hydraulikzylinder. Der Hydraulikzylinder kann entweder als einseitig und als beidseitig mit einer Hydraulikflüssigkeit beaufschlagbarer Hydraulikzylinder ausgebildet sein. Eine derartige Ausgestaltung bietet den Vorteil, dass der steuerbare Aktuator an ein Hydrauliksystem eines Fahrzeugs angeschlossen werden kann.

Bevorzugt ist vorgesehen, dass der steuerbare Aktuator ein Federelement umfasst, welches dazu konfiguriert ist, das Klemmelement in dem wahlweise aktivierbaren Klemmzustand mit einer Klemmkraft in Richtung der Plattform zu beaufschlagen. Eine solche Ausgestaltung ist insbesondere dann von Vorteil, wenn der steuerbare Aktuator ein pneumatischer oder hydraulischer Aktuator ist. Beim Beaufschlagen des Klemmelements mit der Klemmkraft in Richtung der Plattform kann sich das Federelement entspannen. Um das Federelement zu spannen und die Beaufschlagung mit der Klemmkraft in Richtung der Plattform zu vermeiden, kann der pneumatische Aktor mit Druckluft beaufschlagt werden bzw. der hydraulische Aktor mit einer Hydraulikflüssigkeit beaufschlagt werden. Besonders bevorzugt ist der steuerbare Aktuator ein pneumatischer Federspeicher.

Gemäß einer vorteilhaften Ausgestaltung der Erfindung ist vorgesehen, dass die Vorrichtung ein Betätigungselement aufweist, das von einem Benutzer betätigbar ist, um den steuerbaren Aktuator anzusteuern, wobei das Betätigungselement an dem Klemmelement angeordnet ist. Eine derartige Ausgestaltung ist insbesondere dann von Vorteil, wenn ein feststehendes Aktuatorelement des steuerbaren Aktuators an dem Klemmelement angeordnet ist.

Gemäß einer alternativen, vorteilhaften Ausgestaltung ist vorgesehen, dass die Vorrichtung ein Betätigungselement aufweist, das von einem Benutzer betätigbar ist, um den steuerbaren Aktuator anzusteuern. wobei das Betätigungselement getrennt von der Klemmelement, beispielweise an der Plattform oder einem Fahrzeugstrukturelement, angeordnet ist. Eine derartige Ausgestaltung ist insbesondere dann von Vorteil, wenn ein feststehendes Aktuatorelement des steuerbaren Aktuators an der Plattform angeordnet ist.

Bevorzugt ist das Steuerelement als Schalter oder Knopf oder Taster oder Hebel ausgebildet.

Bei den vorstehenden beschriebenen Ausgestaltungen mit einem Betätigungselement - unabhängig davon ob es an dem Klemmelement, an der Plattform oder einem Fahrzeugstrukturelement angeordnet ist - kann eine leitungsgebundene Steuerverbindung zwischen dem Betätigungselement und dem steuerbaren Aktuator bestehen. Die leitungsgebundene Steuerverbindung kann beispielsweise eine elektrische, eine pneumatische oder eine hydraulische Steuerverbindung sein. Alternativ kann die zwischen dem Betätigungselement und dem steuerbaren Aktuator eine leitungslose, insbesondere drahtlose, Steuerverbindung bestehen. Bei einer solchen leitungslosen Steuerverbindung kann das Betätigungselement als mobiles Endgerät ausgestaltet sein, beispielsweise als Tabletcomputer oder Smartphone.

Gemäß einer vorteilhaften Ausgestaltung ist vorgesehen, dass das Klemmelement eine Anlagefläche für die Gabelzinken des Hubwagens aufweist, die rutschhemmend ausgebildet ist. Hierdurch kann ein unerwünschtes Verrutschen des Klemmelements gegenüber den Gabelzinken des Hubwagens verhindert werden. Die Anlagefläche kann beispielsweise eine Schicht oder Matte aus rutschhemmendem Material oder eine rutschhemmende Beschichtung aufweisen.

Bevorzugt umfasst die Plattform der Vorrichtung eine erste Hülse. Die erste Hülse der Plattform ist bevorzugt als Steckhülse, beispielsweise als quadratische oder runde Steckhülse ausgebildet. Bevorzugt ist ein Querschnitt der ersten Hülse an einen Querschnitt eines Teils der Klemmelements angepasst, der in die Hülse eingebracht wird. Die Plattform mit der ersten Hülse ist bevorzugt derart ausgebildet, dass diese als Teil einer Ladefläche eines Fahrzeugs, beispielsweise eines Lastkraftwagens, angeordnet werden kann. Die erste Hülse kann nach unten aus der Ladefläche hervorstehen.

Gemäß einer vorteilhaften Ausgestaltung der Erfindung ist vorgesehen, dass das Klemmelement als Kreuzgebilde oder als Doppelkreuz ausgestaltet ist.

Vorteilhaft ist es, wenn das Klemmelement einen ersten Längsbalken zum Einbringen in die erste Hülse der Plattform und einen senkrecht zu dem ersten Längsbalken und fest mit dem ersten Längsbalken verbundenen ersten Querbalken mit einer Anlagefläche für die Gabelzinken des Hubwagens umfasst. Vorteilhaft ist eine Ausgestaltung, bei der Längs- und Querbalken aus einem Metall, beispielsweise einem Stahl, gefertigt sind. Längs- und Querbalken sind bevorzugt stoffschlüssig miteinander verbunden, insbesondere miteinander verschweißt.

Als besonders vorteilhaft hat sich eine Ausgestaltung erwiesen, bei welcher der erste Querbalken mindestens einen, bevorzugt zwei, Anschläge für die Gabelzinken des Hubwagens aufweist. Die Anschläge sind bevorzugt derart an dem ersten Querbalken angeordnet, dass sie in einen Zwischenraum zwischen den Gabelzinken eingreifen, wenn der Querbalken auf einem Hubwagen aufliegt, um diesen zu fixieren. Durch die Anschläge kann eine möglichst rechtwinklige Anordnung der Gabelzinken in Bezug auf den Querbalken erzwungen werden. Eine zu starke Schrägstellung der Gabelzinken gegenüber dem Querbalken wird verhindert.

Gemäß einer vorteilhaften Ausgestaltung ist vorgesehen, dass das Klemmelement einen senkrecht zu dem ersten Längsbalken und fest mit dem ersten Längsbalken verbundenen zweiten Querbalken umfasst, wobei der zweite Querbalken bevorzugt oberhalb des ersten Querbalkens an dem ersten Längsbalken angeordnet ist. Zum einen kann durch den zweiten Querbalken eine weitere Anlagefläche für einen Aufbau oder einen nach oben verschwenkten Griff des Hubwagens bereitgestellt werden. Dies Anlagefläche kann optional durch an dem zweiten Querbalken angeordnete Distanzstücke, beispielsweise aus Gummi, bereitgestellt werden. Zum anderen kann der zweite Querbalken zum Fixieren des Hubwagens verwendet werden.

In diesem Zusammenhang ist es bevorzugt, wenn an dem zweiten Querbalken eine Verzurreinrichtung zum Verzurren des Hubwagens an dem zweiten Querbalken angeordnet ist. Die Verzurreinrichtung kann als Zurrgurt mit einer Ratsche, insbesondere als Gurtknarre, ausgebildet sein. Die Verzurreinrichtung kann fest mit dem zweiten Querbalken verbunden sein und eine Schlaufe aufweisen, die einen Aufbau und/oder einen nach oben verschwenkten Griff des Hubwagens umschlingen kann. Die Verzurreinrichtung kann nach dem Einbringen des Aufbaus und/oder Griffs in die Schlaufe genutzt werden, um den Aufbau und/oder den Griff an dem Klemmelement zu verzurren.

Gemäß einer vorteilhaften Ausgestaltung umfasst das Klemmelement einen zweiten Längsbalken, der fest mit dem ersten Querbalken und dem ggf. vorhandenen zweiten Querbalken verbunden ist. Besonders vorteilhaft ist es, wenn das Klemmelement einen dritten Längsbalken aufweist, der fest mit dem ersten Querbalken und dem ggf. vorhandenen zweiten Querbalken verbunden ist. Durch den zweiten und ggf. dritten Längsbalken des Klemmelements kann die Stabilität des Klemmelements erhöht werden, was insbesondere zum Fixieren massiverer elektrischer Hubwagen vorteilhaft ist. Zudem kann der zweite und ggf. dritte Längsbalken von einer weiteren Verzurreinrichtung der Vorrichtung umschlungen werden, um einen Aufbau und/oder einen nach oben verschwenkten Griff eines Hubwagens an dem Halteelement zu verzurren.

Bevorzugt umfasst die Plattform eine zweite Hülse zum Einbringen des zweiten Längsbalkens. Besonders bevorzugt umfasst die Plattform eine dritte Hülse zum Einbringen des dritten Längsbalkens. Durch die zweite und ggf. dritte Hülse kann eine Verbindung zwischen Plattform und Klemmelement an mehreren Punkten, insbesondere zwei oder drei Punkten ermöglicht werden. Die zweite und ggf. dritte Hülse der Plattform ist bevorzugt als Steckhülse, beispielsweise als quadratische oder runde Steckhülse ausgebildet. Bevorzugt ist ein Querschnitt der zweiten Hülse an einen Querschnitt desjenigen Längsbalkens angepasst, der in die jeweilige Hülse eingebracht wird.

Gemäß einer vorteilhaften Ausgestaltung der Erfindung weist die eine unterhalb der Plattform separat von der Plattform anordbare Zusatzhalterung mit einer Zusatzhülse zum Einbringen des ersten Längsbalkens auf. Durch die Zusatzhalterung kann der Halt des Klemmelements in seinem in die erste Hülse eingebrachten Zustand verbessert werden.

Zur **Lösung** eingangs genannter Aufgabe wird ferner ein Fahrzeug, insbesondere ein Lastkraftwagen, vorgeschlagen, mit einer Ladefläche und einer an der Ladefläche angeordneten Vorrichtung zur Fixierung eines vorstehend beschriebenen Hubwagens.

Bei dem Fahrzeug können dieselben Vorteile erreicht werden wie sie bereits im Zusammenhang mit der Vorrichtung zur Fixierung eines Hubwagens erläutert worden sind.

Die Plattform der Vorrichtung ist bevorzugt als Teil der Ladefläche vorgesehen. Die Ladefläche kann mit der und den Hülsen der Plattform korrespondierende Durchgangsöffnungen, insbesondere Bohrungen, aufweisen, in welche die Hülse oder Hülsen eingebracht werden können.

Vorteilhaft ist es, wenn das Fahrzeug ein Fahrzeugstrukturelement umfasst und die Vorrichtung ein Betätigungselement aufweist, das von einem Benutzer betätigbar ist, um den steuerbaren Aktuator anzusteuern. wobei das Betätigungselement an dem Fahrzeugstrukturelement angeordnet ist.

Auch die um Zusammenhang mit der erfindungsgemäßen Vorrichtung erläuterten vorteilhaften Merkmale können allein oder im Kombination bei dem erfindungsgemäßen Fahrzeug Anwendung finden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

- **Fig. 1**: zeigt ein erstes Ausführungsbeispiel einer erfindungsgemäßen Vorrichtung in einer perspektivischen Ansicht.
- **Fig. 2**: zeigt ein zweites Ausführungsbeispiel einer erfindungsgemäßen Vorrichtung in einer perspektivischen Ansicht.
- **Fig. 3**: zeigt ein drittes Ausführungsbeispiel einer erfindungsgemäßen Vorrichtung in einer perspektivischen Ansicht.
- **Fig. 4**: zeigt ein viertes Ausführungsbeispiel einer erfindungsgemäßen Vorrichtung in einer perspektivischen Ansicht.
- **Fig. 5**: zeigt ein fünftes Ausführungsbeispiel einer erfindungsgemäßen Vorrichtung in einer perspektivischen Ansicht.
- **Fig. 6**: zeigt ein sechstes Ausführungsbeispiel einer erfindungsgemäßen Vorrichtung in einer perspektivischen Ansicht.
- **Fig. 7**: zeigt exemplarisch einen zwischen einem Klemmelement und einer Plattform fixierten Hubwagen.
- **Fig. 8**: zeigt ein Fahrzeug gemäß einem Ausführungsbeispiel der Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

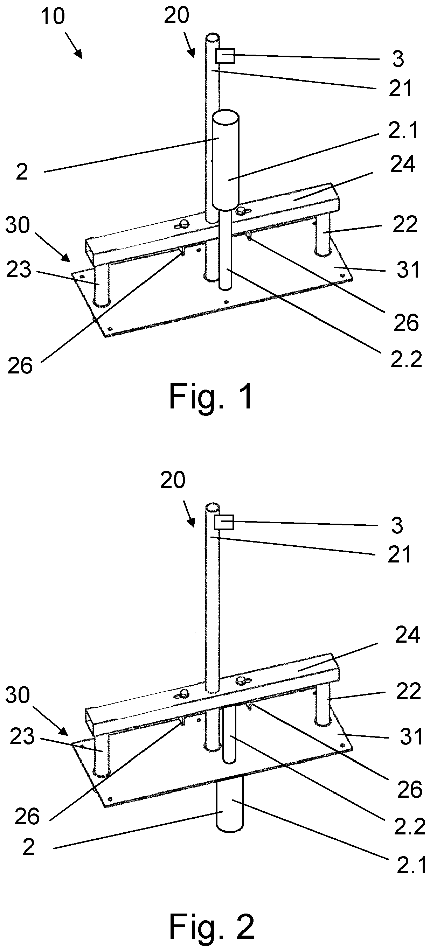

In **Fig. 1** ist ein erstes Ausführungsbeispiel einer erfindungsgemäßen Vorrichtung 10 zur Fixierung eines mindestens zwei Gabelzinken aufweisenden Hubwagens dargestellt. Die Vorrichtung 10 gemäß diesem Ausführungsbeispiel umfasst eine Plattform 30 und ein Klemmelement 20, welches mehrere Längsbalken 21, 22, 23 und genau einen Querbalken 24 aufweist. Die Plattform 30 weist gemäß diesem Ausführungsbeispiel eine Platte 31 und mehrere Hülsen 32, 33, 34 auf, wobei jeweils eine Hülse 32, 33, 34 für genau einen Längsbalken 21, 22, 23 vorgesehen ist. Die Vorrichtung umfasst ferner einen schaltbaren Aktuator 2. Der schaltbare Aktuator 2 ist in Fig. 1 schematisch dargestellt und ist dazu konfiguriert, das Klemmelement 20 in einem wahlweise aktivierbaren Klemmzustand mit einer Klemmkraft in Richtung der Plattform 30 zu beaufschlagen, um zwischen dem Klemmelement 20 und der Plattform 30 angeordnete Gabelzinken eines Hubwagens und damit den gesamten Hubwagen kraftschlüssig zu fixieren. Der Hubwagen wird hierzu mit seinen Gabelzinken zwischen die Plattform 30 und das Klemmelement 20 gefahren. Dann wird der steuerbare Aktuator 2 derart angesteuert, dass er aus der in Fig. 1 gezeigten Freigabezustand, in welchem die Gabelzinken des Hubwagens zwischen Klemmelement 20 und Plattform 30 verbracht werden können, in den Klemmzustand überführt wird.

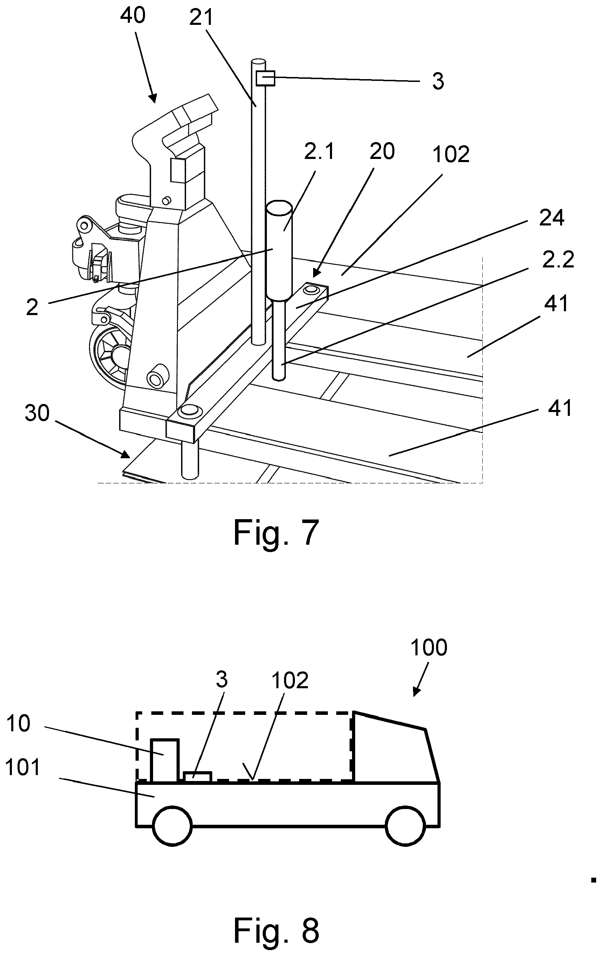

Ein Beispiel eines Hubwagens 40, der durch ein Klemmelement 20 fixiert ist, ist in **Fig. 7** dargestellt. In dem gezeigten Zustand klemmt das Klemmelement 20 die Gabelzinken 41 des Hubwagens 40 gegenüber der Plattform 30 ein, so dass eine unerwünschte Bewegung des Hubwagens 40 vermieden werden kann. Die Plattform 30 der Vorrichtung 10 gemäß Fig. 7 ist auf einer Ladefläche 102 eines Fahrzeugs montiert.

Der steuerbare Aktuator 2 gemäß **Fig. 1** ist als Linearaktuator ausgebildet und umfasst ein feststehendes Aktuatorelement 2.1, hier einen Zylinder, und ein gegenüber dem feststehenden Aktuatorelement 2.1 bewegbares Aktuatorelement 2.2, hier ein Kolben bzw. eine Stange. Das feststehende Aktuatorelement 2.1 ist fest an dem Klemmelement 20 angeordnet. Das bewegbare Aktuatorelement 2.2, insbesondere ein freies Ende des bewegbaren Aktuatorelements 2.2, ist lösbar mit der Plattform 30 verbunden. Zur lösbaren Verbindung von bewegbarem Aktuatorelement 2.2 und der Plattform 30 kann ein Bajonettverschluss oder ein Haken verwendet werden.

Der steuerbare Aktuator 20 kann als elektromechanischer Aktuator, insbesondere als elektromechanischer Linearantrieb, oder als pneumatischer Aktuator oder als hydraulischer Aktuator ausgebildet sein. Dabei kann der steuerbare Aktuator 2 ein Federelement umfassen, welches dazu konfiguriert ist, das Klemmelement 20 in dem wahlweise aktivierbaren Klemmzustand mit der Klemmkraft in Richtung der Plattform 30 zu beaufschlagen. Die Vorrichtung 10 weist ferner ein Betätigungselement 3 auf, das von einem Benutzer betätigbar ist, um den steuerbaren Aktuator 2 anzusteuern. wobei das Betätigungselement 3 an dem Klemmelement 20 angeordnet ist.

An dem der Querbalken 24 des Klemmelements 20 sind zwei Anschläge 26 für die Gabelzinken 41 des Hubwagens 40 vorgesehen. Ferner ist die Anlagefläche für die Gabelzinken 41, die sich an der Unterseite des Querbalkens 24 zwischen dem jeweiligen Anschlag 26 und einem der äußeren Längsbalken 22, 23 befindet, rutschhemmend ausgebildet.

In **Fig. 2** ist ein zweites Ausführungsbeispiel einer erfindungsgemäßen Vorrichtung 10 zur Fixierung eines mindestens zwei Gabelzinken 41 aufweisenden Hubwagens 40 dargestellt. Diese Vorrichtung 10 entspricht im Wesentlichen der Vorrichtung gemäß dem ersten Ausführungsbeispiel mit dem Unterschied, dass das feststehende Aktuatorelement 2.1 fest an der Plattform 30 oder einem Fahrzeugstrukturelement angeordnet ist. Das bewegbare Aktuatorelement 2.2, insbesondere ein freies Ende des bewegbaren Aktuatorelements 2.2, ist lösbar mit dem Klemmelement 20 verbunden. Zur lösbaren Verbindung von bewegbarem Aktuatorelement 2.2 und der Klemmelement 20 kann ein Bajonettverschluss oder ein Haken verwendet werden.

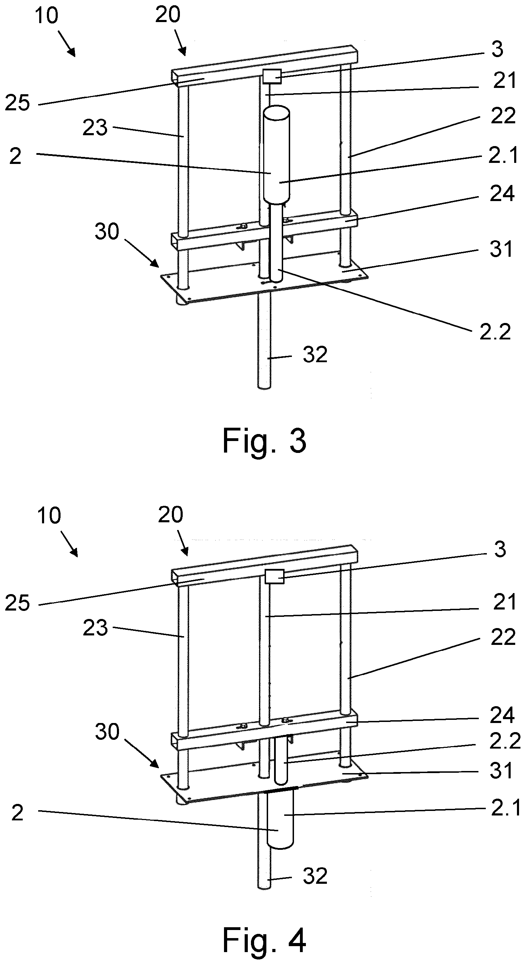

In **Fig. 3** ist ein drittes Ausführungsbeispiel einer erfindungsgemäßen Vorrichtung 10 zur Fixierung eines mindestens zwei Gabelzinken 41 aufweisenden Hubwagens 40 dargestellt. Diese Vorrichtung 10 entspricht im Wesentlichen der Vorrichtung gemäß dem ersten Ausführungsbeispiel mit dem Unterschied, dass das Klemmelement 20 einen senkrecht zu dem ersten Längsbalken 21 und fest mit dem ersten Längsbalken 21 verbundenen zweiten Querbalken 25 umfasst, der oberhalb des ersten Querbalkens 24 an dem ersten Längsbalken 21 angeordnet ist.

In **Fig. 4** ist ein viertes Ausführungsbeispiel einer erfindungsgemäßen Vorrichtung 10 zur Fixierung eines mindestens zwei Gabelzinken 41 aufweisenden Hubwagens 40 dargestellt. Diese Vorrichtung 10 entspricht im Wesentlichen der Vorrichtung gemäß dem drittes Ausführungsbeispiel mit dem Unterschied, dass das feststehende Aktuatorelement 2.1 fest an der Plattform 30 oder einem Fahrzeugstrukturelement angeordnet ist. Das bewegbare Aktuatorelement 2.2, insbesondere ein freies Ende des bewegbaren Aktuatorelements 2.2, ist lösbar mit dem Klemmelement 20 verbunden. Zur lösbaren Verbindung von bewegbarem Aktuatorelement 2.2 und der Klemmelement 20 kann ein Bajonettverschluss oder ein Haken verwendet werden.

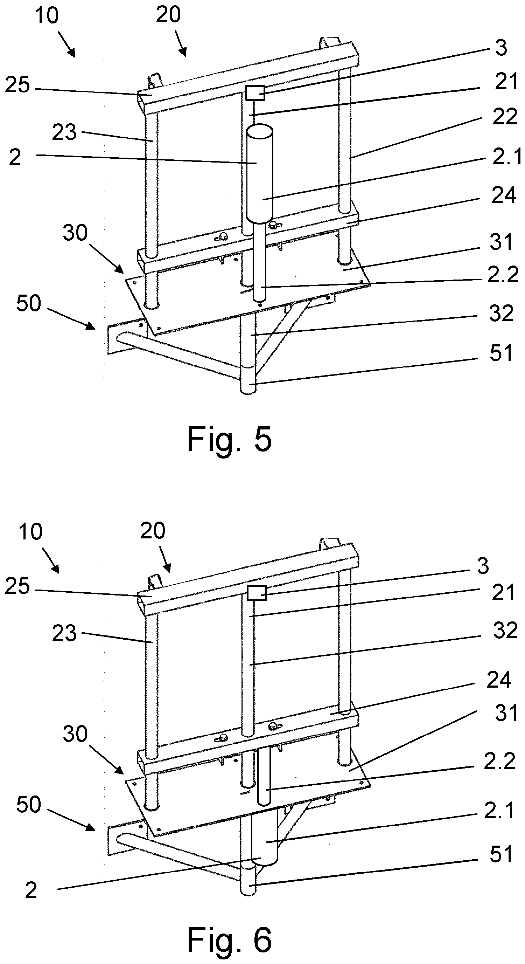

In **Fig. 5** ist ein fünftes Ausführungsbeispiel einer erfindungsgemäßen Vorrichtung 10 zur Fixierung eines mindestens zwei Gabelzinken 41 aufweisenden Hubwagens 40 dargestellt. Diese Vorrichtung 10 entspricht im Wesentlichen der Vorrichtung 10 gemäß dem dritten Ausführungsbeispiel mit dem Unterschied, dass unterhalb der Plattform 30 und separat von dieser angeordnet eine Zusatzhalterung 50 mit einer Zusatzhülse 51 zum Einbringen des ersten Längsbalkens 21 vorgesehen ist.

In **Fig. 6** ist ein sechstes Ausführungsbeispiel einer erfindungsgemäßen Vorrichtung 10 zur Fixierung eines mindestens zwei Gabelzinken 41 aufweisenden Hubwagens 40 dargestellt. Diese Vorrichtung 10 entspricht im Wesentlichen der Vorrichtung gemäß dem fünften Ausführungsbeispiel mit dem Unterschied, dass das feststehende Aktuatorelement 2.1 fest an der Plattform 30 oder einem Fahrzeugstrukturelement angeordnet ist. Das bewegbare Aktuatorelement 2.2, insbesondere ein freies Ende des bewegbaren Aktuatorelements 2.2, ist lösbar mit dem Klemmelement 20 verbunden. Zur lösbaren Verbindung von bewegbarem Aktuatorelement 2.2 und der Klemmelement 20 kann ein Bajonettverschluss oder ein Haken verwendet werden.

Die Darstellung in **Fig. 8** zeigt ein Ausführungsbeispiel eines erfindungsgemäßen Fahrzeugs 100. Das Fahrzeug 100 ist als Lastkraftwagen ausgestaltet und umfasst eine Vorrichtung 10 zur Fixierung eines mindestens zwei Gabelzinken 41 aufweisenden Hubwagens 40, die gemäß einem der vorstehend erläuterten Ausführungsbeispiele ausgebildet sein kann. Das Fahrzeug 100 umfasst mehrere Fahrzeugstrukturelemente 101, beispielsweise Elemente des Fahrzeugrahmens und Elemente der Fahrzeugkarosserie. Ferner weust das Fahrzeug 100 eine Ladefläche zur Aufnahme von Ladegut auf. An der Ladefläche ist die Vorrichtung 10 zur Fixierung eines mindestens zwei Gabelzinken 41 aufweisenden Hubwagens angeordnet. Dabei kann die die Plattform 30 der Vorrichtung 10 an der Ladefläche 102 befestigt sein oder in die Ladefläche 102 integriert sein.

Das Betätigungselement der Vorrichtung 10 kann - wie anhand der Darstellungen in Fig. 1 bis 6 erläutert - an dem Klemmelement 20 angeordnet sein. Alternativ oder zusätzlich kann ein Betätigungselement 3, das von einem Benutzer betätigbar ist, um den steuerbaren Aktuator 2 anzusteuern an einem Fahrzeugstrukturelement 101 des Fahrzeugs 100 angeordnet sein.

### Bezugszeichenliste

- 1: Klemmelement
- 2: steuerbarer Aktuator
- 3: Betätigungselement
- 10: Vorrichtung zur Fixierung eines Hubwagens
- 20: Klemmelement
- 21: Längsbalken
- 22: Längsbalken
- 23: Längsbalken
- 24: Querbalken
- 25: Querbalken
- 26: Anschlag

- 30: Plattform
- 31: Platte
- 32: Hülse
- 33: Hülse
- 34: Hülse

- 40: Hubwagen
- 41: Gabelzinke

- 100: Fahrzeug
- 101: Fahrzeugstrukturelement
- 102: Ladefläche

## Patentansprüche

1. Vorrichtung (10) zur Fixierung eines mindestens zwei Gabelzinken (41) aufweisenden Hubwagens (40)
mit einer Plattform (30),
mit einem Klemmelement (20) zur Beaufschlagung der Gabelzinken (41) des Hubwagens (40) mit einer Druckkraft in Richtung der Plattform (30),
und mit einem steuerbaren Aktuator (2), der dazu konfiguriert ist, das Klemmelement (20) in einem wahlweise aktivierbaren Klemmzustand mit einer Klemmkraft in Richtung der Plattform (30) zu beaufschlagen.

2. Vorrichtung (10) nach Anspruch 1, **dadurch gekennzeichnet, dass** der steuerbare Aktuator (2) ein Linearaktuator ist, der ein feststehendes Aktuatorelement (2.1) und ein gegenüber dem feststehenden Aktuatorelement (2.1) bewegbares Aktuatorelement, (2.2) insbesondere eine bewegbare Stange, aufweist.

3. Vorrichtung (10) nach Anspruch 2, **dadurch gekennzeichnet, dass** das feststehende Aktuatorelement (2.1) an dem Klemmelement (20) angeordnet ist.

4. Vorrichtung (10) nach Anspruch 2, **dadurch gekennzeichnet, dass** das feststehende Aktuatorelement (2.1) an der Plattform (30) angeordnet ist.

5. Vorrichtung (10) nach einem der vorhergehenden Ansprüche, **dadurch gekennzeichnet, dass** der steuerbare Aktuator (2) ein elektromechanischer Aktuator, insbesondere ein elektromechanischer Linearantrieb, ist.

6. Vorrichtung (10) nach einem der Ansprüche 1 bis 4, **dadurch gekennzeichnet, dass** der steuerbare Aktuator (2) ein pneumatischer Aktuator ist.

7. Vorrichtung (10) nach einem der Ansprüche 1 bis 4, **dadurch gekennzeichnet, dass** der steuerbare Aktuator (2) ein hydraulischer Aktuator ist.

8. Vorrichtung (10) nach einem der vorhergehenden Ansprüche, **dadurch gekennzeichnet, dass** der steuerbare Aktuator (2) ein Federelement umfasst, welches dazu konfiguriert ist, das Klemmelement (20) in dem wahlweise aktivierbaren Klemmzustand mit der Klemmkraft in Richtung der Plattform (30) zu beaufschlagen.

9. Vorrichtung (10) nach einem der vorhergehenden Ansprüche, **dadurch gekennzeichnet, dass** die Vorrichtung (10) ein Betätigungselement (3) aufweist, das von einem Benutzer betätigbar ist, um den steuerbaren Aktuator (2) anzusteuern, wobei das Betätigungselement (3) an dem Klemmelement (20) angeordnet ist.

10. Vorrichtung (10) nach einem der vorhergehenden Ansprüche, **dadurch gekennzeichnet, dass** die Vorrichtung (10) ein Betätigungselement (3) aufweist, das von einem Benutzer betätigbar ist, um den steuerbaren Aktuator (29 anzusteuern, wobei das Betätigungselement (3) getrennt von der Klemmelement (20), beispielweise an der Plattform (30) oder einem Fahrzeugstrukturelement (101), angeordnet ist.

11. Vorrichtung (10) nach einem der vorhergehenden Ansprüche, **dadurch gekennzeichnet, dass** das Klemmelement (20) eine Anlagefläche für die Gabelzinken (41) des Hubwagens (40) aufweist, die rutschhemmend ausgebildet ist.

12. Vorrichtung (10) nach einem der vorhergehenden Ansprüche, **dadurch gekennzeichnet, dass** die Plattform (30) eine erste Hülse (32) umfasst,
und das Klemmelement (1, 7, 20)
einen ersten Längsbalken (21) zum Einbringen in die erste Hülse (32) der Plattform (30) und
einen senkrecht zu dem ersten Längsbalken (21) und fest mit dem ersten Längsbalken (21) verbundenen ersten Querbalken (24) mit einer Anlagefläche für die Gabelzinken (41) des Hubwagens (40) umfasst.

13. Fahrzeug (100), insbesondere Lastkraftwagen, mit einer Ladefläche (102) und einer an der Ladefläche (102) angeordneten Vorrichtung (10) zur Fixierung eines Hubwagens (40) nach einem der vorhergehenden Ansprüche.

14. Fahrzeug (100) nach Anspruch 13, **dadurch gekennzeichnet, dass** das Fahrzeug (100) ein Fahrzeugstrukturelement (101) umfasst und die Vorrichtung (10) ein Betätigungselement (3) aufweist, das von einem Benutzer betätigbar ist, um den steuerbaren Aktuator (2) anzusteuern, wobei das Betätigungselement (3) an dem Fahrzeugstrukturelement (101) angeordnet ist.
